# EUROPEAN PATENT APPLICATION

(11) **EP 1 679 873 A1**
(43) Date of publication of application: **12.07.2006**
(21) Application number: 06000081.7
(22) Date of filing: 03.01.2006
(51) Int. Cl.: H04M 7/00, H04L 29/12, H04L 12/28

(54) **Registering phone numbers of wireless terminals**

(30) Priority: 07.01.2005 KR 2005001875
(71) Applicant: Samsung Electronics Co., Ltd., Suwon-si, Gyeonggi-Do (KR)
(72) Inventor: Kil, Tae-Young, Songpa-gu Seoul (KR); Hwang, Doo-Il, Seocho-gu Seoul (KR)
(74) Representative: Lang, Johannes

(57) **Abstract**

A wireless network system includes: a plurality of wireless terminals; and wireless network access equipment for storing a plurality of phone numbers assigned to each of the wireless terminals and dynamically assigning the phone numbers and Internet Protocol (IP) addresses to each of the wireless terminals. The method of registering a phone number of a wireless terminal in a wireless network system includes: storing a plurality of phone numbers determined to be assignable with respect to each of a plurality of wireless terminals; responding to a request from a first wireless terminal gaining new access to the wireless network system and assigning a dynamic IP address to the first wireless terminal; responding to a request from the first wireless terminal and sending network information on the phone number assigned to the first wireless terminal; and registering the phone number as a phone number of the first wireless terminal.

## Description

### BACKGROUND OF THE INVENTION

### 1. Technical Field

The present invention relates to registering phone numbers of a wireless terminals, and more particularly, to a method and system to dynamically register a plurality of phone numbers of wireless terminals.

### 2. Related Art

In general, added value that can be obtained through a wired telephone network is considerably small in scale compared with added value that can be obtained through a wireless network. For example, the wireless network not only provides various services and contents such as Short Message, Service (SMS), Enhanced Message Service (EMS), Multimedia Message Service (MMS), various games and video solutions, etc., but also supports methods that allow users to access the network with ease, mobility, etc. In contrast, the wired telephone network provides only voice call transmission-reception oriented services.

IEEE 802.11 Wireless Local Area Network (WLAN) technology has been under development and demand for WLANs have been exponentially increasing. The WLAN refers to a short-range communication network using a radio or infra-red transmission technique. More specifically, the WLAN is a network capable of high-speed Internet access through a wireless terminal, e.g. a Personal Digital Assistant (PDA), a notebook computer, etc., within a certain radius of a place where an Access Point (AP) has been installed.

The WLAN is also called Wi-Fi (Wireless Fidelity) in a sense that it allows a wireless network to be conveniently used like a Hi-Fi audio system. Hence, a phone used in the WLAN is called a "WLAN phone" or "Wi-Fi phone."

With regard to the WLAN, a radio range was no more than 10 meters in the beginning, but starting in the 2000s, it has drastically increased to 50 to 200 meters. Furthermore, a transmission speed ranges from 4 to 11 Mbps, so that a large volume of multimedia information can be transmitted and received. Furthermore, the WLAN guarantees inexpensive fees, mobility, and security.

Thus, when the WLAN is combined with the wired telephone network, it is possible to have mobility within a limited space and to elevate services provided in the wired telephone network to the level of services provided in the wireless network. Currently, there is an effort to establish a new network where the WLAN and the wired telephone network are integrated.

As to the Wi-Fi phone used in the new network having the WLAN integrated with the wired telephone network, once its phone number is assigned, its user cannot change the phone number. Once a phone number is assigned to the Wi-Fi phone, the phone number can be changed only by a service provider when it is intended to be changed.

For example, when a user of the Wi-Fi phone wants to change an existing phone number, the user must follow a procedure for requesting the service provider to deactivate the existing phone number and activate a new phone number, that is, a new phone number subscription procedure.

There is a current tendency among many mobile communication terminal users to frequently change their phone numbers to protect private information and personal privacy. Therefore, a method of easily changing and registering a phone number at the request of the mobile communication terminal user is needed. In other words, in order to prevent leakage of personal information associated with a mobile communication terminal's phone number, a method of dynamically registering phone numbers that would enable the user to change and use a plurality of phone numbers is needed.

### SUMMARY OF THE INVENTION

It is, therefore, an object of the present invention to provide a method and wireless network system for minimizing leakage of information of wireless terminal users.

It is another object of the present invention to provide a method and wireless network system to easily change a phone number at the request of a wireless terminal user.

It is yet another object of the present invention to provide a method and wireless network system to assign a plurality of phone numbers to one wireless terminal and to dynamically register the phone numbers.

In order to accomplish these objects, a method of registering a phone number of a wireless terminal in a wireless network system is provided, the method comprising: storing a plurality of phone numbers determined to be assignable with respect to each of a plurality of wireless terminals; responding to a request from a first wireless terminal gaining new access to the wireless network system for assignment of an Internet Protocol (IP) address, and assigning a dynamic IP address to the first wireless terminal; sending the assigned dynamic IP address to the first wireless terminal; sending the plurality of phone numbers determined to be assignable to the first wireless terminal; responding to a request from the first wireless terminal selecting one of the plurality of phone numbers determined to be assignable in order to register the selected phone number, and determining whether or not the selected phone number is available; sending network information on the selected phone number to the first wireless terminal upon a determination that the selected phone number is available; and registering the selected phone number as a phone number of the first wireless terminal.

In responding to a request from a first wireless terminal gaining new access to the wireless network system for assignment of an IP address, and assigning a dynamic IP address to the first wireless terminal, a Media Access Control (MAC) address of the new wireless terminal is preferably received in order to assign the dynamic IP address corresponding to the MAC address.

In sending network information on the selected phone number to the first wireless terminal upon a determination that the selected phone number is available, the network information of the selected phone number is preferably sent to the first wireless terminal, the network information including a Session Initiation Protocol (SIP) server's IP address, a proxy server's IP address and a SIP key value.

In sending network information on the selected phone number to the first wireless terminal upon a determination that the selected phone number is available, the network information is preferably sent as a type of document.

In sending network information on the selected phone number to the first wireless terminal upon a determination that the selected phone number is available, the network information is preferably sent as a type of eXtensible Markup Language (XML) document.

In registering the selected phone number as a phone number of the first wireless terminal, a management table is preferably stored in wireless network access equipment, the management table defining the MAC address of the first wireless terminal, the assigned IP address, and the requested phone number, as one session.

The method preferably further comprises storing the plurality of phone numbers determined to be assignable with respect to each wireless terminal in the corresponding wireless terminals; wherein the responding to a request from the first wireless terminal selecting one of the plurality of phone numbers determined to be assignable in order to register the selected phone number, and determining whether or not the selected phone number is available is performed in response to a request from the first wireless terminal selecting any one of the plurality of phone numbers stored in the first wireless terminal to register the phone number.

The method preferably further comprises: responding to a request of a second wireless terminal using a pre-registered phone number to cancel registration of the phone number, and deleting the pre-registered phone number of the second wireless terminal; responding to a request from the second wireless terminal to release the IP address assigned to the second wireless terminal, and releasing the IP address; responding to a request from the second wireless terminal for a new IP address, assigning the new IP address to the second wireless terminal, and sending the new IP address to the second wireless terminal; sending the plurality of phone numbers determined to be assignable to the second wireless terminal to the second wireless terminal; responding to a request from the second wireless terminal selecting one of the plurality of phone numbers determined to be assignable to register the phone number, and determining whether or not the selected phone number is available; sending network information on the selected phone number to the second wireless terminal upon a determination that the selected phone number is available; and registering the selected phone number as a phone number of the second wireless terminal.

In responding to a request from the second wireless terminal for a new IP address, assigning the new IP address to the second wireless terminal, and sending the new IP address to the second wireless terminal, a MAC address of the registered wireless terminal is preferably received in order to assign the dynamic IP address corresponding to the MAC address.

In sending network information on the selected phone number to the second wireless terminal upon a determination that the selected phone number is available, the network information of the selected phone number is preferably sent to the second wireless terminal, the network information including a Session Initiation Protocol (SIP) server's IP address, a proxy server's IP address, and a SIP key value.

In sending network information on the selected phone number to the second wireless terminal upon a determination that the selected phone number is available, the network information is preferably sent as a type of document.

In sending network information on the selected phone number to the second wireless terminal upon a determination that the selected phone number is available, the network information is preferably sent as a type of eXtensible Markup Language (XML) document.

In registering the selected phone number as a phone number of the second wireless terminal, a management table is preferably stored in wireless network access equipment, the management table defining the MAC address of the new wireless terminal, the assigned IP address, and the requested phone number, as one session.

The method preferably further comprises storing the plurality of phone numbers determined to be assignable with respect to each wireless terminal in the corresponding wireless terminals; wherein responding to a request from the second wireless terminal selecting one of the plurality of phone numbers determined to be assignable to register the phone number, and determining whether or not the selected phone number is available is performed in response to the request from the second wireless terminal selecting one of the plurality of phone numbers stored in the second wireless terminal to register the phone number.

In order to also accomplish these objects, a wireless network system is provided comprising: a plurality of wireless terminals; and wireless network access equipment adapted to store a plurality of phone numbers assigned to each of the wireless terminals and to dynamically assign the phone numbers and Internet Protocol (IP) addresses to each of the wireless terminals.

The wireless network access equipment preferably comprises: a dynamic IP address assignment server adapted to dynamically assign the IP addresses to the wireless terminals; a wireless terminal-specific phone number storage adapted to store the plurality of phone numbers assigned to each of the wireless terminals; and a controller adapted to respond to a request from a wireless terminal to select one of the plurality of phone numbers assigned to the wireless terminal from the wireless terminal-specific phone number storage.

The dynamic IP address assignment server is preferably adapted to respond to a request from the first wireless terminal gaining new access to the wireless network system to assign the IP address, and to assign a new IP address to the first wireless terminal.

The dynamic IP address assignment server is preferably adapted to respond to a request from the second wireless terminal already having access to the wireless network system to change the IP address, to release the IP address assigned to the second wireless terminal, and to assign a new IP address to the second wireless terminal.

The dynamic IP address assignment server preferably comprises a Dynamic Host Configuration Protocol (DHCP) server.

The controller is preferably adapted to respond to a request from the first wireless terminal gaining new access to the wireless network system to register the phone number, to select one of the plurality of phone numbers assigned to the first wireless terminal from the wireless terminal-specific phone number storage, and to register the selected phone number as a phone number of the first wireless terminal.

The controller is preferably adapted to select one of the plurality of phone numbers assigned to the first wireless terminal on the basis of selection information of the first wireless terminal.

The controller is preferably adapted to determine whether or not the selected phone number is available, and to send network information on the selected phone number to the first wireless terminal upon a determination that the selected phone number is available.

The controller is preferably adapted to send the network information of the selected phone number to the first wireless terminal, the network information including a Session Initiation Protocol (SIP), a server's IP address, a proxy server's IP address, and a SIP key value.

The controller is preferably adapted to send the network information as a type of document.

The controller is preferably adapted to sends the network information as a type of eXtensible Markup Language (XML) document.

The controller is preferably adapted to respond to a request from the second wireless terminal that already has access to the wireless network system to change the phone number, to delete the old phone number registered as a phone number of the second wireless terminal, to select one of the plurality of phone numbers assigned to the second wireless terminal from the wireless terminal-specific phone number storage, and to register the selected phone number as a new phone number of the second wireless terminal.

The controller is preferably adapted to select one of the plurality of phone numbers assigned to the second wireless terminal on the basis of selection information of the second wireless terminal.

The controller is preferably adapted to determine whether or not the selected phone number is available, and to send network information on the selected phone number to the second wireless terminal upon a determination that the selected phone number is available.

The controller is preferably adapted to send the network information of the selected phone number to the second wireless terminal, the network information including a Session Initiation Protocol (SIP) server's IP address, a proxy server's IP address, and a SIP key value.

The controller is preferably adapted to send the network information as a type of document.

The controller is preferably adapted to send the network information as an extensible Markup Language (XML) document.

The wireless network access equipment preferably further comprises a wireless terminal association information management table adapted to define, as one session, a Media Access Control (MAC) address of each of the wireless terminals, the IP address assigned to the corresponding wireless terminal, and the registered phone number of the corresponding wireless terminal.

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings, in which like reference symbols indicate the same or similar components, wherein:
Fig. 1 is a view of a configuration of a wireless network system to which the present invention is applied;
Fig. 2 is a block diagram of wireless network access equipment according to an embodiment of the present invention;
Fig. 3 is a view of an example of a data structure of a terminal-specific phone number storage unit of wireless network access equipment according to an embodiment of the present invention;
Fig. 4 is a view of a configuration of a terminal-specific association information management table of wireless network access equipment of the present invention;
Fig. 5 is a view of a method of registering a phone number of a wireless terminal according to a first embodiment of the present invention; and
Fig. 6 is a view of a method of registering a phone number of a wireless terminal according to a second embodiment of the present invention.

### DETAILED DESCRIPTION OF THE INVENTION

Hereinafter, exemplary embodiments of the present invention are described in detail with reference to the accompanying drawings. In the drawings, like elements are denoted by like reference numerals and symbols. Also, in describing the present invention, descriptions of related functions that are of common knowledge in the art, and concrete descriptions deemed unnecessary to understand the invention have been omitted.

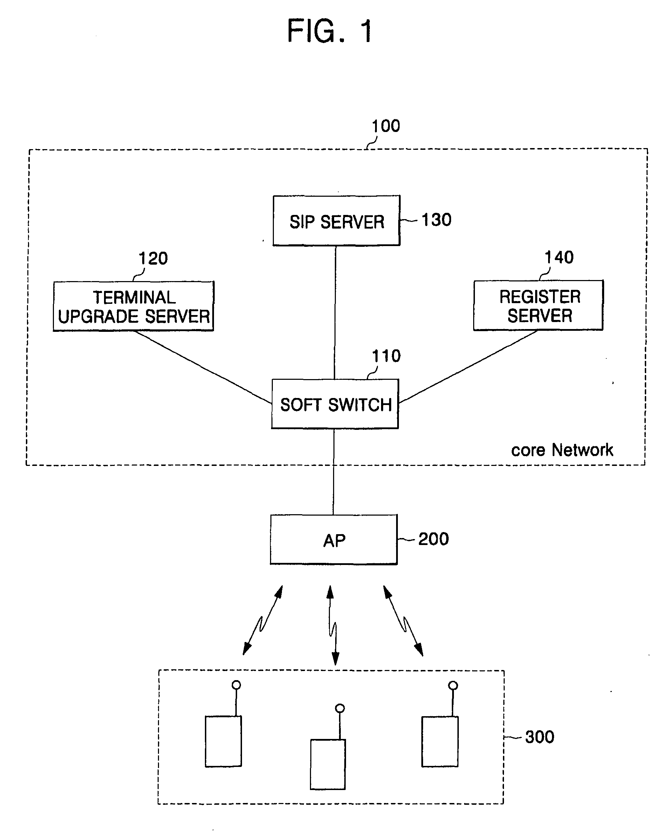

Fig. 1 a view of a configuration of a wireless network system to which the present invention is applied. In particular, Fig. 1 a view of a configuration of a WLAN system. Referring to Fig. 1, the WLAN is composed of a core network 100, an Access Point (AP) 200, and WLAN terminals (so-called Wi-Fi phones) 300.

The core network 100 provides call connection and additional services, and includes a group of service nodes and a soft switch 110, wherein the group of service nodes includes a Session Initiation Protocol (SIP) server 130 that plays a core role of the network, a terminal upgrade server 120 that stores software image files for upgrading the WLAN terminals 300 and provides upgrade services for the WLAN terminals 300, and a register server 140 that registers the WLAN terminals 300 with a service provider network of the WLAN terminals 300 (for example, endowing and registering phone numbers). The soft switch 110 serves to analyze data transmitted from the WLAN terminals 300 and then to transmit the analyzed data to the server of interest.

The AP 200 serves not only to provide an IEEE 802.11 WLAN interface, but also to provide an interface between the WLAN terminals 300 and the core network 100. Preferably, the AP 200 has a built-in Dynamic Host Configuration Protocol (DHCP) server to dynamically assign an Internet Protocol (IP) address to each of the WLAN terminals 300.

DHCP refers to a protocol that lets network administrators centrally manage and automate the assignment of IP addresses in an organization's network. In particular, DHCP uses the concept of a lease according to which a given IP address is valid for a computer only for a predetermined period of time. The lease time can vary depending on how long a user is likely to require an Internet connection at a particular location. Therefore, using a very short lease time, DHCP can dynamically reconfigure networks in which there are more computers than available IP addresses. The DHCP server dynamically assigns the IP addresses to the corresponding terminals using DHCP.

Furthermore, the AP 200 stores the plurality of phone numbers assigned to each of the WLAN terminals 300. To this end, the AP 200 preferably includes a storage region (hereinafter, referred to as a "pool") corresponding to each of the WLAN terminals, for managing the plurality of phone numbers. In response to a request from any one of the WLAN terminals 300 to dynamically register a phone number, the AP 200 detects information on the phone number from the pool that manages the phone numbers of the corresponding WLAN terminal, and transmits the detected information to the corresponding WLAN terminal.

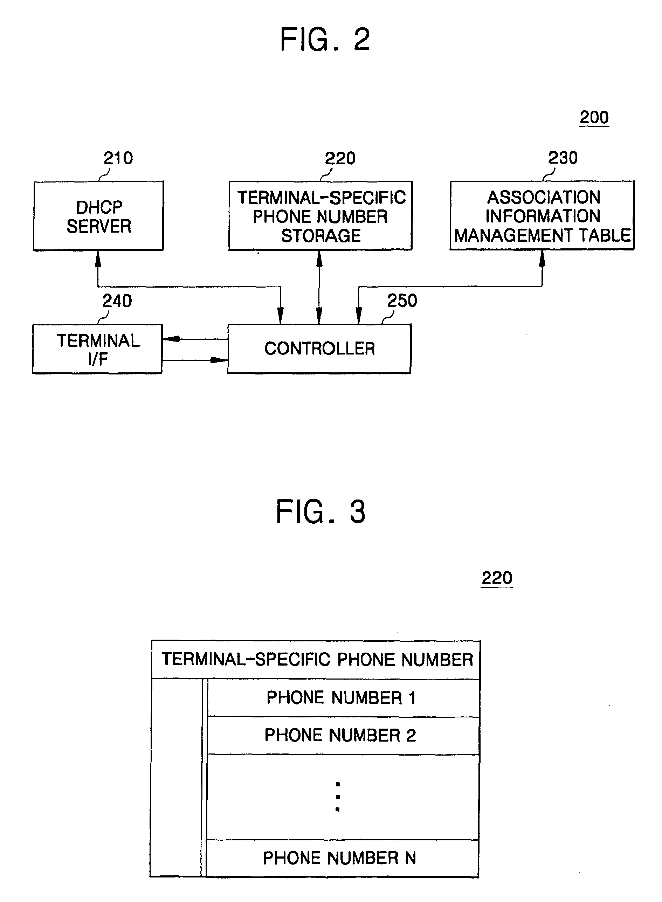

Furthermore, the AP 200 stores a phone number management table for each of the WLAN terminals. In other words, the AP 200 stores a Media Access Control (MAC) address of each of the WLAN terminals, and the IP address and phone number that are assigned to the WLAN terminal corresponding to the MAC address. The management table is described in more detail below with reference to Fig. 2, in which an example of its configuration is shown.

The WLAN terminals 300 communicate with an external network (e.g. WLAN, etc.) via an internal user interface. One phone number and one IP address are assigned to each of the WLAN terminals 300. Preferably, the IP address is assigned to each of the WLAN terminals 300 from the DHCP server in the AP 200.

Fig. 2 is a block diagram of access equipment of a wireless network according to an embodiment of the present invention. In other words, Fig. 2 is a block diagram of an AP 200 of a WLAN to which the present invention is applied. The AP 200 stores a plurality of phone numbers that are assigned to each of the WLAN terminals 300 as shown in Fig. 1, and dynamically assigns IP address and phone number to each of the WLAN terminals 300. To this end, the AP 200 preferably includes a DHCP server 210, a storage unit 220 for terminal-specific phone numbers (e.g. a phone number pool), an association information management table 230, a terminal interface (I/F) 240, and a controller 250.

Operation of each component of the AP 200 is described below in detail with reference to Figs. 1 and 2.

The DHCP server 210 dynamically assigns IP addresses to the WLAN terminals 300. In particular, the DHCP server 210 assigns a new IP address to a first WLAN terminal that gets new access to a wireless network in response to a request from the first WLAN terminal for assignment of an IP address. Furthermore, the DHCP server 210 releases an old IP address assigned to a second WLAN terminal that has access to the wireless network and then assigns a new IP address to the second WLAN terminal in response to a request from the second WLAN terminal to change its IP address.

The storage unit 220 stores the plurality of phone numbers assigned to each of the WLAN terminals 300. A data structure of the storage unit 220 is shown in Fig. 3 by way of an example. Referring to Fig. 3, the storage unit 220 stores terminal identification numbers, and the plurality of phone numbers that can be assigned to the corresponding WLAN terminals.

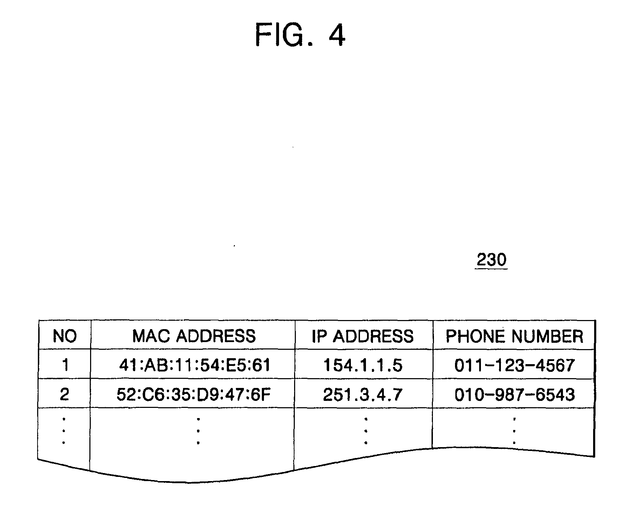

The association information management table 230 defines, as one session, the MAC address of each of the WLAN terminals 300, the IP address assigned to the WLAN terminal corresponding to the MAC address and the registered phone number of the WLAN terminal corresponding to the MAC address. An example of the configuration of the association information management table 230 is shown in Fig. 4. Referring to Fig. 4, the association information management table 230 stores the MAC address, the IP address, and the phone number, corresponding to each of the WLAN terminals 300.

The controller 250 receiving the request from the WLAN terminal via the terminal I/F 240 selects any one of the plurality of phone numbers that are assigned to the corresponding WLAN terminal from the storage unit 220 in response to the request from the corresponding WLAN terminal. Then, the controller 250 registers the selected phone number as the phone number of the corresponding WLAN terminal.

For example, the controller 250 selects any one of the plurality of phone numbers assigned to a first WLAN terminal gaining new access to a WLAN from the storage unit 220, in response to the request for phone number registration from the first WLAN terminal, and registers the selected phone number as the phone number of the first WLAN terminal. The controller 250 preferably stores the phone number in the association information management table 230, together with the MAC address of the first WLAN terminal.

Furthermore, the controller 250 deletes an old phone number registered as the phone number of a second WLAN terminal that has access to a WLAN in response to the request for phone number change from the second WLAN terminal, selects any one of the plurality of phone numbers assigned to the second WLAN terminal from the storage unit 220, and registers the selected phone number as a new phone number of the second WLAN terminal. For example, the controller 250 preferably deletes the old phone number of the second WLAN terminal which has stored in the association information management table 230, and then stores the newly selected phone number.

The controller 250 preferably selects the phone numbers that will be registered as the phone numbers of the first and second WLAN terminals on the basis of selection information of each of the first and second WLAN terminals.

Furthermore, the controller 250 determines whether or not the selected phone number is available. If the selected phone number is determined to be available, the controller 250 preferably transmits network information on the selected phone number, e.g., the SIP server's IP address, the proxy server's IP address, the SIP key value, etc., to each of the first and second WLAN terminals. In particular, the controller preferably transmits the network information as a type of document, e.g., a type of extensible Markup Language (XML) document.

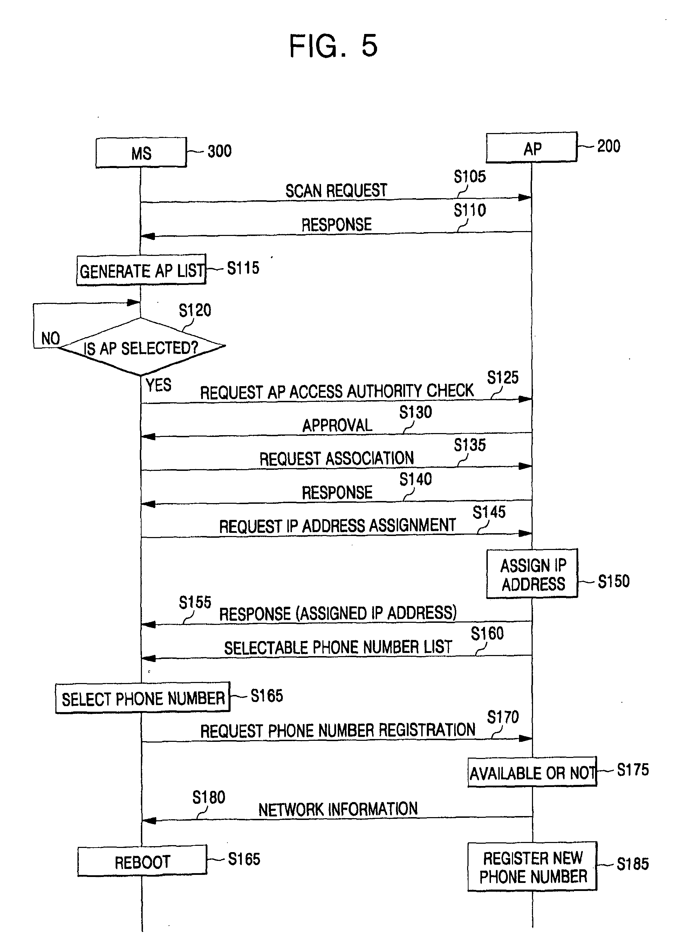

Fig. 5 is a view of a method of registering a phone number of a wireless terminal according to a first embodiment of the present invention. In Fig. 5, a process of registering a new phone number when an arbitrary WLAN terminal or Mobile Station (MS) 300 first gains access to a WLAN is illustrated.

Referring to Fig. 5, the MS 300 performs a series of processes S105 to S140 of sending a scan request message to a network, e.g., a WLAN, selecting an AP that will be accessed based on the response, and setting up an association with the AP. For instance, the MS 300 issues a scan request to the network including the MS 300 (S105). In order to scan for an accessible AP, the MS 300 broadcasts the scan request message to the network. Then, the MS 300 receives a response to the scan request message from accessible APs (S 110), generates a list of the accessible APs (S 115), and provides the AP list to the user. When the user selects any one of the accessible APs included in the AP list (S120), (the selected AP is referred to here as an AP 200), the MS 300 requests the AP 200 to check the AP access authority (S125). It is preferable to use a web key. The MS 300 receiving a response to the request, i.e. an approval of access authority, from the AP 200 (S125) makes a request for association to the AP 200 again and receives a response to the request. The exemplary processes S105 to S140 are similar to an initialization process that is typically performed in the WLAN.

In this manner, the MS 300 setting the association with the AP 200 requests the AP 200 to assign an IP address (S 145). The MS 300 must send its own MAC address as well.

The AP 200 then assigns a dynamic IP address to the MS 300 using the built-in DHCP server in response to the request (S150), and sends a response message including the assigned IP address to the MS 300 (S 155).

The AP 200 detects a phone number, which the MS 300 can select, from the pre-stored phone number pool, and sends the detected phone number to the MS 300 (S160). In other words, in order to manage a plurality of phone numbers that can be assigned to the MS 300, the AP 200 detects the phone number, which the MS 300 can select, from the pre-stored phone number pool, and sends the detected phone number to the MS 300. Preferably, the plurality of phone numbers that the MS 300 can select from are stored in advance in the phone number pool. For example, it is preferable for five phone numbers that can be assigned to the MS 300 to be stored in the phone number pool.

The MS 300 then selects a desired phone number from a phone number list (S165), and requests the AP 200 to register the selected phone number (S 170).

The MS 300 can use the phone number list that is received from the AP 200 or pre-stored in the MS 300. In the latter case, process S160 can be omitted.

The AP 200 receiving the request for registration of the phone number determines whether or not the phone number can be used (S 175), and sends network information on the phone number to the MS 300 (S180). For example, the AP 200 determines whether or not the phone number that the MS 300 requests to register is already being used. If the phone number is determined to be available, the AP 200 sends the network information of the phone number. For instance, the AP 200 sends to the MS 300, a SIP server's IP address, a proxy server's IP address, a SIP key value, etc. that correspond to the available phone number. Furthermore, the network information is preferably sent as a type of document, e.g., a type of XML document.

Finally, the AP 200 registers the requested phone number as a new phone number of the corresponding MS 300 (S185), while the MS 300 receiving the network information of the phone number reboots on the basis of the network information (S190). The MS 300 is thereby enabled for communication with the requested phone number.

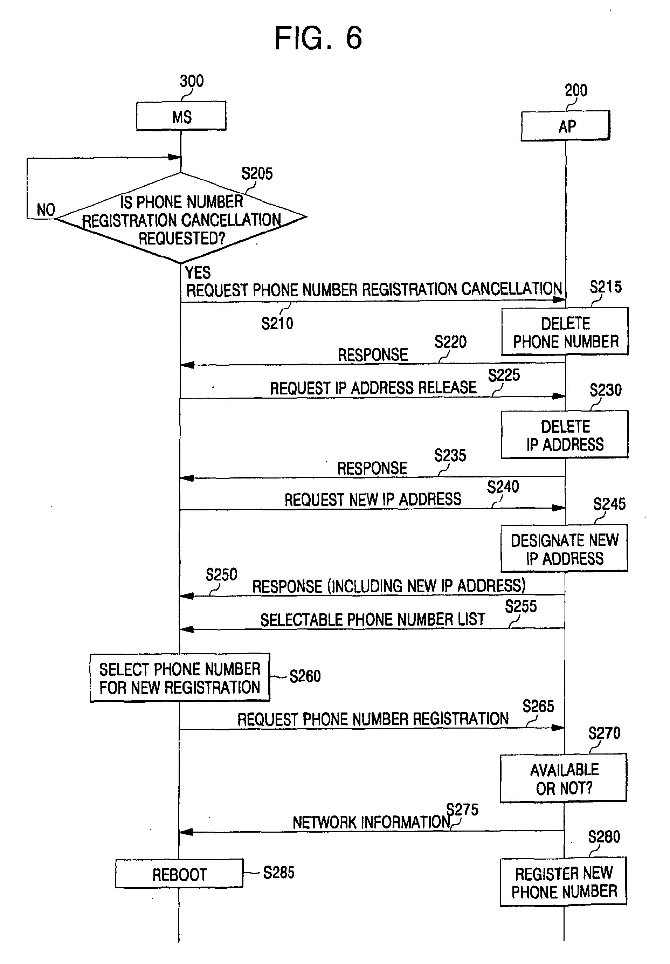

Fig. 6 is a view of a method of registering a phone number of a wireless terminal according to a second embodiment of the present invention. Fig. 6 illustrates a process of canceling registration of an old phone number and registering a new phone number requested by a user when an arbitrary WLAN terminal or mobile station (MS) 300 that has access to a WLAN intends to change a previously assigned phone number, i.e., an old phone number.

Referring to Fig. 6, when receiving a request for cancellation of registration of a phone number (S205), the MS 300 that already has access to the WLAN requests the AP 200 to cancel registration of the phone number (S210). In other words, the MS 300 requests cancellation of registration of the phone number that has been already used. The MS 300 sends the phone number that has been already used together with its own MAC address.

The AP 200 then deletes the phone number (S215). Specifically, the AP 200 detects a phone number corresponding to the MAC address sent by the MS 300 from a management table like that of Fig. 2, and deletes the detected phone number. For example, if the MAC address of the MS 300 is "41:AB:11:54:E5:61", the MS 300 deletes the phone number, e.g., "011-123-4567", corresponding to the MAC address from the management table.

The AP 200 then sends a response message notifying the MS 300 of the result (S220). The MS 300 receiving the response message requests release of an assigned IP address corresponding to the deleted phone number (S225). The MS 300 sends its own MAC address.

The AP 200 then deletes the IP address (S230). Specifically, the AP 200 detects an IP address corresponding to the MAC address sent by the MS 300 from the management table shown in Fig. 2, and deletes the detected IP address. For example, if the MAC address of the MS 300 is "41:AB:11:54:E5:61" then the MS 300 deletes the IP address, e.g., "154.1.1.5" corresponding to the MAC address from the management table.

The AP 200 then sends a response message notifying the MS 300 of the result (S235).

In order to register a new phone number, the MS 300 receiving the response message requests the AP 200 for a new IP address to be used together with the new phone number (S240). The AP designates the new IP address in response to the request (S245) and sends a response message including the new IP address to the MS 300 (S250).

The new IP address corresponding to "41:AB:11:54:E5:61 (MAC address)" is stored in the management table at a location where the previous IP address, "154.1.1.5", was stored.

The AP 200 detects a phone number, which the MS 300 can select from a pre-stored phone number pool, and sends the detected phone number to the MS 300 (S255). In other words, in order to manage a plurality of phone numbers that can be assigned to the MS 300, the AP 200 detects the phone number, which the MS 300 can select from the pre-stored phone number pool stored in the AP in advance, and sends the detected phone number to the MS 300. Preferably, the plurality of phone numbers from which the MS 300 can select are stored in the phone number pool in advance. For example, it is preferable for five phone numbers that can be assigned to the MS 300 to be stored in the phone number pool.

The MS 300 then selects a desired phone number from a phone number list (S260), and requests the AP 200 to register the selected phone number (S265).

The MS 300 can use the phone number list that is received from the AP 200 or pre-stored in the MS 300. In the latter case, process S255 can be omitted.

The AP 200 receiving the request for registration of the phone number determines whether or not the phone number can be used (S270), and sends network information on the phone number to the MS 300 (S275). For example, the AP 200 determines whether or not the phone number that the MS 300 has requested to register is already in use. If the phone number is determined to be available, the AP 200 sends the network information of the phone number. For instance, the AP 200 sends to the MS 300, a SIP server's IP address, a proxy server's IP address, a SIP key value, etc. that correspond to the available phone number. Furthermore, the network information is preferably sent as a type of document, e.g., a type of XML document.

The AP 200 then registers the requested phone number as a new phone number of the corresponding MS 300 (S280). The MS 300 receiving the network information of the phone number reboots on the basis of the network information (S285). At this point, the MS 300 is enabled for communication with the request phone number.

As can be seen from the foregoing, the present invention assigns a plurality of phone numbers to one wireless terminal to dynamically register the assigned phone numbers. Thus, a phone number of the wireless terminal can be easily changed at the request of a user. Accordingly, leakage of information about wireless terminal users can be minimized.

While the present invention has been described with reference to exemplary embodiments thereof, it will be understood by those skilled in the art that various modifications in form and detail can be made therein without departing from the scope of the present invention as defined by the following claims.

## Claims

1. A method of registering a phone number of a wireless terminal in a wireless network system, the method comprising:
storing a plurality of phone numbers determined to be assignable with respect to each of a plurality of wireless terminals;
responding to a request from a first wireless terminal gaining new access to the wireless network system for assignment of an Internet Protocol (IP) address, and assigning a dynamic IP address to the first wireless terminal;
sending the assigned dynamic IP address to the first wireless terminal;
sending the plurality of phone numbers determined to be assignable to the first wireless terminal;
responding to a request from the first wireless terminal selecting one of the plurality of phone numbers determined to be assignable in order to register the selected phone number, and determining whether or not the selected phone number is available;
sending network information on the selected phone number to the first wireless terminal upon a determination that the selected phone number is available; and
registering the selected phone number as a phone number of the first wireless terminal.

2. The method of claim 1, wherein in responding to a request from a first wireless terminal gaining new access to the wireless network system for assignment of an IP address, and assigning a dynamic IP address to the first wireless terminal, a Media Access Control (MAC) address of the new wireless terminal is received in order to assign the dynamic IP address corresponding to the MAC address.

3. The method of claim 1, wherein in sending network information on the selected phone number to the first wireless terminal upon a determination that the selected phone number is available, the network information of the selected phone number is sent to the first wireless terminal, the network information including a Session Initiation Protocol (SIP) server's IP address, a proxy server's IP address and a SIP key value.

4. The method of claim 1, wherein in sending network information on the selected phone number to the first wireless terminal upon a determination that the selected phone number is available, the network information is sent as a type of document.

5. The method of claim 4, wherein in sending network information on the selected phone number to the first wireless terminal upon a determination that the selected phone number is available, the network information is sent as a type of eXtensible Markup Language (XML) document.

6. The method of claim 2, wherein in registering the selected phone number as a phone number of the first wireless terminal, a management table is stored in wireless network access equipment, the management table defining the MAC address of the first wireless terminal, the assigned IP address, and the requested phone number, as one session.

7. The method of claim 1, further comprising storing the plurality of phone numbers determined to be assignable with respect to each wireless terminal in the corresponding wireless terminals;
wherein the responding to a request from the first wireless terminal selecting one of the plurality of phone numbers determined to be assignable in order to register the selected phone number, and determining whether or not the selected phone number is available is performed in response to a request from the first wireless terminal selecting any one of the plurality of phone numbers stored in the first wireless terminal to register the phone number.

8. The method of claim 1, further comprising:
responding to a request of a second wireless terminal using a pre-registered phone number to cancel registration of the phone number, and deleting the pre-registered phone number of the second wireless terminal;
responding to a request from the second wireless terminal to release the IP address assigned to the second wireless terminal, and releasing the IP address;
responding to a request from the second wireless terminal for a new IP address, assigning the new IP address to the second wireless terminal, and sending the new IP address to the second wireless terminal;
sending the plurality of phone numbers determined to be assignable to the second wireless terminal to the second wireless terminal;
responding to a request from the second wireless terminal selecting one of the plurality of phone numbers determined to be assignable to register the phone number, and determining whether or not the selected phone number is available;
sending network information on the selected phone number to the second wireless terminal upon a determination that the selected phone number is available; and
registering the selected phone number as a phone number of the second wireless terminal.

9. The method of claim 8, wherein in responding to a request from the second wireless terminal for a new IP address, assigning the new IP address to the second wireless terminal, and sending the new IP address to the second wireless terminal, a MAC address of the registered wireless terminal is received in order to assign the dynamic IP address corresponding to the MAC address.

10. The method of claim 8, wherein in sending network information on the selected phone number to the second wireless terminal upon a determination that the selected phone number is available, the network information of the selected phone number is sent to the second wireless terminal, the network information including a Session Initiation Protocol (SIP) server's IP address, a proxy server's IP address, and a SIP key value.

11. The method of claim 8, wherein in sending network information on the selected phone number to the second wireless terminal upon a determination that the selected phone number is available, the network information is sent as a type of document.

12. The method of claim 11, wherein in sending network information on the selected phone number to the second wireless terminal upon a determination that the selected phone number is available, the network information is sent as a type of eXtensible Markup Language (XML) document.

13. The method of claim 8, wherein in registering the selected phone number as a phone number of the second wireless terminal, a management table is stored in wireless network access equipment, the management table defining the MAC address of the new wireless terminal, the assigned IP address, and the requested phone number, as one session.

14. The method of claim 8, further comprising storing the plurality of phone numbers determined to be assignable with respect to each wireless terminal in the corresponding wireless terminals;
wherein responding to a request from the second wireless terminal selecting one of the plurality of phone numbers determined to be assignable to register the phone number, and determining whether or not the selected phone number is available is performed in response to the request from the second wireless terminal selecting one of the plurality of phone numbers stored in the second wireless terminal to register the phone number.

15. A wireless network system comprising:
a plurality of wireless terminals; and
wireless network access equipment adapted to store a plurality of phone numbers assigned to each of the wireless terminals and to dynamically assign the phone numbers.

16. The wireless network system of claim 15, wherein the wireless network access equipment comprises:
a dynamic IP address assignment server adapted to dynamically assign the IP addresses to the wireless terminals;
a wireless terminal-specific phone number storage adapted to store the plurality of phone numbers assigned to each of the wireless terminals; and
a controller adapted to respond to a request from a wireless terminal to select one of the plurality of phone numbers assigned to the wireless terminal from the wireless terminal-specific phone number storage.

17. The wireless network system of claim 16, wherein the dynamic IP address assignment server is adapted to respond to a request from the first wireless terminal gaining new access to the wireless network system to assign the IP address, and to assign a new IP address to the first wireless terminal.

18. The wireless network system of claim 16, wherein the dynamic IP address assignment server is adapted to respond to a request from the second wireless terminal already having access to the wireless network system to change the IP address, to release the IP address assigned to the second wireless terminal, and to assign a new IP address to the second wireless terminal.

19. The wireless network system of claim 16, wherein the dynamic IP address assignment server comprises a Dynamic Host Configuration Protocol (DHCP) server.

20. The wireless network system of claim 16, wherein the controller is adapted to respond to a request from the first wireless terminal gaining new access to the wireless network system to register the phone number, to select one of the plurality of phone numbers assigned to the first wireless terminal from the wireless terminal-specific phone number storage, and to register the selected phone number as a phone number of the first wireless terminal.

21. The wireless network system of claim 20, wherein the controller is adapted to select one of the plurality of phone numbers assigned to the first wireless terminal on the basis of selection information of the first wireless terminal.

22. The wireless network system of claim 21, wherein the controller is adapted to determine whether or not the selected phone number is available, and to send network information on the selected phone number to the first wireless terminal upon a determination that the selected phone number is available.

23. The wireless network system of claim 22, wherein the controller is adapted to send the network information of the selected phone number to the first wireless terminal, the network information including a Session Initiation Protocol (SIP), a server's IP address, a proxy server's IP address, and a SIP key value.

24. The wireless network system of claim 22, wherein the controller is adapted to send the network information as a type of document.

25. The wireless network system of claim 24, wherein the controller is adapted to sends the network information as a type of eXtensible Markup Language (XML) document.

26. The wireless network system of claim 16, wherein the controller is adapted to respond to a request from the second wireless terminal that already has access to the wireless network system to change the phone number, to delete the old phone number registered as a phone number of the second wireless terminal, to select one of the plurality of phone numbers assigned to the second wireless terminal from the wireless terminal-specific phone number storage, and to register the selected phone number as a new phone number of the second wireless terminal.

27. The wireless network system of claim 26, wherein the controller is adapted to select one of the plurality of phone numbers assigned to the second wireless terminal on the basis of selection information of the second wireless terminal.

28. The wireless network system of claim 27, wherein the controller is adapted to determine whether or not the selected phone number is available, and to send network information on the selected phone number to the second wireless terminal upon a determination that the selected phone number is available.

29. The wireless network system of claim 28, wherein the controller is adapted to send the network information of the selected phone number to the second wireless terminal, the network information including a Session Initiation Protocol (SIP) server's IP address, a proxy server's IP address, and a SIP key value.

30. The wireless network system of claim 29, wherein the controller is adapted to send the network information as a type of document.

31. The wireless network system of claim 29, wherein the controller is adapted to send the network information as an extensible Markup Language (XML) document.

32. The wireless network system of claim 16, wherein the wireless network access equipment further comprises a wireless terminal association information management table adapted to define, as one session, a Media Access Control (MAC) address of each of the wireless terminals, the IP address assigned to the corresponding wireless terminal, and the registered phone number of the corresponding wireless terminal.
